# EUROPÄISCHE PATENTANMELDUNG

(11) **EP 3 048 366 A1**
(43) Veröffentlichungstag der Anmeldung: **27.07.2016**
(21) Anmeldenummer: 15152291.9
(22) Anmeldetag: 23.01.2015
(51) Int. Cl.: F22B 1/18

(54) **ABHITZEDAMPFERZEUGER**

(71) Anmelder: Siemens Aktiengesellschaft, 80333 München (DE)
(72) Erfinder: Zubrod, Horst, 91080 Uttenreuth (DE)

(57) **Zusammenfassung**

Die Erfindung betrifft einen Abhitzedampferzeuger, insbesondere Abhitzedampferzeuger in stehender Bauweise, mit einem Abgaskanal (10) in dem zumindest eine Verdampferheizfläche (12) und zumindest eine Vorwärmerheizfläche (11) angeordnet sind, wobei die zumindest eine Verdampferheizfläche (12) und die zumindest eine Vorwärmerheizfläche (11) so miteinander verbunden sind, dass speisewasserseitig die zumindest eine Vorwärmerheizfläche (11) der zumindest einen Verdampferheizfläche (12) vorgeschaltet ist, und einem Wasserabscheider (20,20') der der zumindest einen Verdampferheizfläche (12) speisewasserseitig nachgeschaltet ist, außerhalb des Abgaskanals (10) und speisewasserseitig zwischen der zumindest einen Vorwärmerheizfläche (11) und der zumindest einen Verdampferheizfläche (12) ein Überhubrohrsystem angeordnet ist, das so ausgebildet ist das Speisewasser nach vollständiger Befüllung der zumindest einen Vorwärmerheizfläche (11) in einem Steigrohr (15') des Überhubrohrsystems einen Überlauf (15"') erreicht und so über ein Fallrohr (15") in die zumindest eine Verdampferheizfläche (12) gelangt.

## Beschreibung

Die Erfindung betrifft einen Abhitzedampferzeuger gemäß dem Oberbegriff des Anspruchs 1.

Bei einer Gas- und Dampfturbinenanlage wird das aus einer Gasturbine austretende Abgas zur Erzeugung von Dampf für die Dampfturbine genutzt. Die Wärmeübertragung erfolgt dabei in einem der Gasturbine nachgeschalteten Abhitzedampferzeuger, bei dem in einem Abgaskanal eine Anzahl von Heizflächen zur Speisewasservorwärmung, zur Dampferzeugung und auch zur anschließenden Dampfüberhitzung angeordnet sind. Die Heizflächen sind dazu in den Speisewasser-Dampf-Kreislauf der Dampfturbine geschaltet und werden so nacheinander von dem darin strömenden Medium durchströmt.

Für den der Gasturbine abgasseitig nachgeschalteten Abhitzedampferzeuger kommen dabei mehrere alternative Auslegungskonzepte, nämlich die Auslegung als Durchlaufdampferzeuger oder die Auslegung als Umlaufdampferzeuger, in Betracht. Bei einem Durchlaufdampferzeuger führt die Beheizung von Verdampferrohren der Verdampferheizflächen zu einer Verdampfung des Strömungsmediums in einem einmaligen Durchlauf.

Beim Anfahren des Abhitzedampferzeugers kann es zu einem sogenannten Wasserausstoß kommen. Dieser entsteht, wenn die infolge der nach dem Start beginnenden Beheizung der Verdampferrohre eintretende Verdampfung des darin befindlichen Strömungsmediums erstmals einsetzt. Geschieht dies beispielsweise in der Mitte des jeweiligen Verdampferrohres, wird die stromabwärts vorhandene Wassermenge (auch als Wasserpfropfen bezeichnet) aus dem jeweiligen Verdampferrohr hinausgeschoben. Um sicher auszuschließen, dass unverdampftes Strömungsmedium aus den Verdampferrohren in die nachgeschalteten Überhitzerheizflächen gelangen kann, ist zwischen den Verdampferheizflächen und den nachgeschalteten Überhitzerheizflächen üblicherweise ein Wasserabscheider vorgesehen. Abgeschiedenes Wasser wird in diesem Wasserabscheider dann einer Entspannungseinrichtung zugeführt. Der bei der Entspannung in der atmosphärischen Entspannungseinrichtung entstehende Dampf wird üblicherweise an die Umgebung abgegeben, was wesentlich zum Wasserverlust beim Anfahren des Abhitzekessels beiträgt. Das bei der Entspannung in der atmosphärischen Entspanner anfallende Wasser kann wieder dem Speisewasser-Dampf-Kreislauf zugeführt werden. Das in den atmosphärischen Entspanner geführte Wasser erhöht die Energieverluste beim Anfahren des Abhitzedampferzeugers.

Soll nun ein solcher Wasserausstoß beim Anfahren weitestgehend vermieden werden, würde eine naheliegende Lösung darin bestehen, dass den Vorwärmerheizflächen ein Ventil nachgeschaltet ist, so dass die in den nachgeschaltenen Verdampferheizflächen einströmende Speisewassermenge geregelt werden kann. Hierbei muss jedoch das Vorwärmersystem für einen höheren Pumpenendruck ausgelegt werden, was zu Mehrkosten führt.

Aufgabe der Erfindung ist es, einen Abhitzedampferzeuger bereit zu stellen, der die zuvor beschriebenen Nachteile beim Anfahren überwindet.

Diese Aufgabe wird mit dem Abhitzedampferzeuger mit den Merkmalen des Anspruchs 1 gelöst.

Dadurch, dass außerhalb des Abgaskanals und speisewasserseitig zwischen der zumindest einen Vorwärmerheizfläche und der zumindest einen Verdampferheizfläche ein Überhubrohrsystem angeordnet ist, das so ausgebildet ist, dass Speisewasser nach vollständiger Befüllung der zumindest einen Vorwärmerheizfläche in einem Steigrohr des Überhubrohrsystems einen Überlauf erreicht und so über ein Fallrohr in die zumindest eine Verdampferheizfläche gelangt, kann der Wasserstand in der zumindest einen Verdampferheizfläche trotz vollständig gefüllter Vorwärmerheizfläche(n) beliebig eingestellt werden. Da im Gegensatz zu der bekannten Lösung kein Ventil hinter den Vorwärmerheizflächen vorgesehen ist, können diese Druckteile für den niedrigeren Auslegungsdruck auf der Dampfseite des Abhitzedampferzeugers ausgelegt werden.

Insgesamt kommt es so mit der erfindungsgemäßen Anordnung zu einer deutlichen Reduzierung des Wasserverlustes beim Anfahren des Abhitzedampferzeugers und damit zu geringeren Energieverlusten. Zudem sind im Vergleich zu der bekannten Lösung die Kosten für den erfindungsgemäßen Abhitzedampferzeuger deutlich geringer. Weiterhin ist durch die erfindungsgemäße Ausbildung und Anordnung des Abhitzedampferzeugers mit dem Überhubrohrsystem das Economizer-System, bestehend aus der zumindest einen Vorwärmerheizfläche, immer vollständig gefüllt, so dass der nachgeschaltete Wasserabscheider niedriger aufgehängt werden kann. Dies führt zu kürzeren Rohrleitungen in diesem Bereich und somit zu einer weiteren Kostenersparnis.

Vorzugsweise ist zwischen der zumindest einen Verdampferheizfläche und einer atmosphärische Entspannungseinrichtung, eine Entwässerungsleitung mit zumindest einem Entwässerungsventil zur Entwässerung der zumindest einen Verdampferheizfläche vorgesehen und/oder zwischen dem Überlauf des Überhubrohrsystems und einer Dampfableitung des Wasserabscheiders, eine Entlüftungsleitung mit einem Entlüftungsventil vorgesehen. Mit den Ventilen, die in diesen Hilfsleitungen angeordnet sind, kann der Wasserstand des Speisewassers in der zumindest einen Verdampferheizfläche vor jedem Startzustand unabhängig vom Systemdruck eingepegelt werden.

Um den Wasserstand in den Verdampferheizflächen zu erfassen ist eine geeignete Höhenstandsmessung zu installieren. Dazu ist bevorzugt parallel zu der zumindest einen Verdampferheizfläche eine Messleitung und eine Druckmesseinrichtung zur Höhenstandsmessung des Speisewassers in der zumindest einem Verdampferheizfläche vorgesehen.

Die Erfindung soll nun anhand der nachfolgenden Figuren beispielhaft erläutert werden. Es zeigen:
- FIG 1: schematisch eine bekannte Anordnung eines Abhitzedampferzeugers;
- FIG 2: schematisch eine bekannte Anordnung einer verbesserten Lösung eines Abhitzedampferezeugers;
- FIG 3: schematisch eine erfindungsgemäße Ausbildung und Anordnung eines Abhitzedampferezugers.

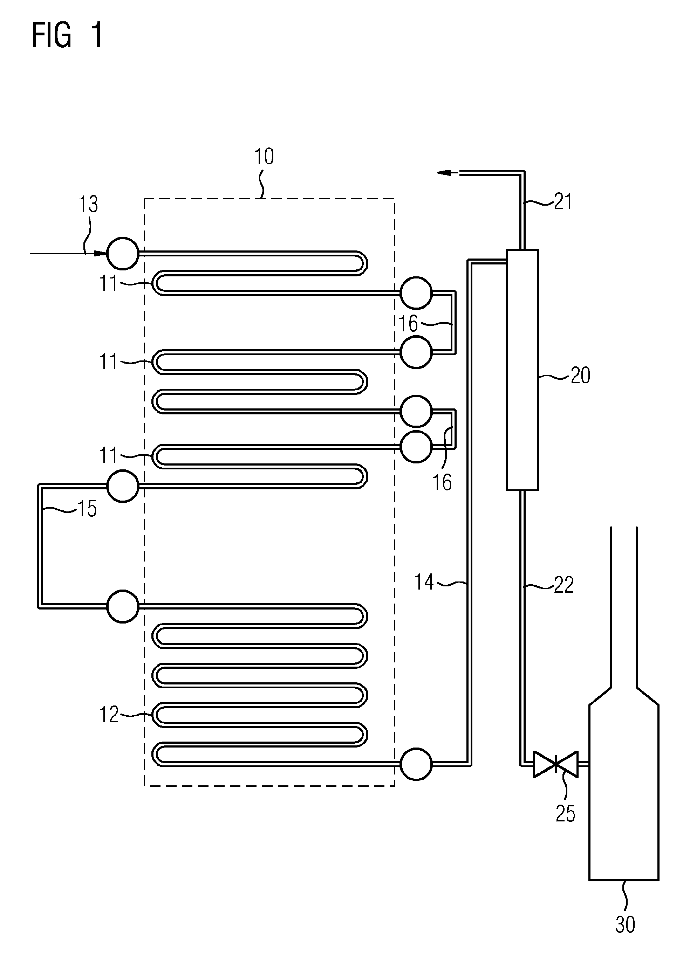

In FIG 1 ist sehr schematisch der prinzipielle Aufbau heute bekannter Abhitzedampferzeuger in stehender Bauweise gezeigt. Durch den Abgaskanal 10 des Abhitzedampferzeugers strömt von unten nach oben Abgas aus einer nicht näher dargestellten Gasturbine. Innerhalb des Abgaskanals 10 sind in vertikaler Richtung mehrere Heizflächen 11 und 12 angeordnet, die von einem Strömungsmedium aus dem Speisewasser-Dampf-Kreislauf einer Dampfturbine durchströmt werden. Dabei wird Wärme von dem Abgas auf das Strömungsmedium übertragen und kann so für die weitere Energieumwandlung in der Dampfturbine genutzt werden, so dass sich insgesamt ein höherer Wirkungsgrad für eine Gas- und Dampfturbinenanlage ergibt.

Die verschiedenen Heizflächen sind so in dem Abgaskanal 10 angeordnet, dass prinzipiell die Vorwärmerheizflächen 11 abgasseitig der zumindest einen Verdampferheizfläche 12 und weiteren nicht dargestellten Überhitzerheizflächen nachgeschaltet sind. Heute bekannte Anordnungen zeigen aber einen deutlich komplexeren Aufbau mit teilweise ineiandergreifenden Heizflächenanordnungen. Strömungsmediumseitig sind dagegen die Vorwärmerheizflächen 11 der eigentlichen Verdampferheizfläche 12 nachgeschaltet, so dass kühles in die Vorwärmerheizflächen 11 einströmendes Speisewasser 13 im kälteren Teil des Abgaskanals 10 moderat erhitzt wird und erst anschließend im heißeren Teil des Abgaskanals 10 in den dort angeordneten Verdampferheizflächen 12 verdampft wird.

Jede der Heizflächen 11 und 12 besteht aus einer Vielzahl von nebeneinander angeordneten Rohren die über jeweilige - schematisch dargestellte - Sammler an den Ein- und Ausgängen der Heizflächen 11 und 12 miteinander in Verbindung stehen, so dass es zu einer Vergleichmäßigung des durchströmenden Strömungsmediums durch den jeweiligen Rohrverbund einer Heizfläche kommt. In der in FIG 1 dargestellten Anordnung sind im Abgaskanal 10 drei Vorwämerheizflächen 11 angeordnet, die über entsprechende Sammler und Verbindungsleitungen 16 miteinander verbunden sind. Anschließend wird das aus der letzten Vorwärmerheizfläche austretende Strömungsmedium über eine weitere Verbindungsleitung 15 in die Verdampferheizfläche 12 geführt. Am Ausgang der hier dargestellten einzigen Verdampferheizfläche 12 ist über einen weiteren Sammler und eine weitere Verbindungsleitung 14 ein Wasserabscheider 20 angebunden. Beim Anfahren des Abhitzedampferzeugers aus der Verdampferheizfläche 12 ausgestoßenes unverdampftes Strömungsmedium wird so zusammen mit verdampftem Strömungsmedium in den Wasserabscheider 20 eingeleitet und dort getrennt. Das verdampfte Strömungsmedium kann über eine Dampfleitung 21 beispielsweise einer weiteren Überhitzerheizfläche zugeführt werden, während das unverdampfte Strömungsmedium über ein Ablaufventil 25 und eine atmosphärische Entspannungseinrichtung 30 teilweise wieder als Speiswasser dem Speiswasser-Dampf-Kreislauf zugeführt werden kann.

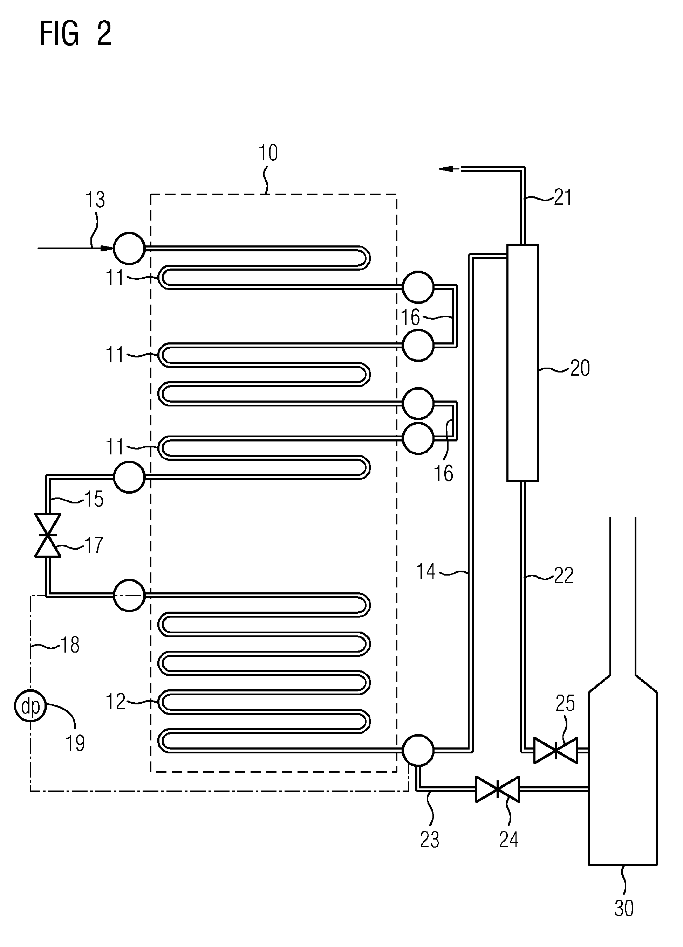

Im Gegensatz zu der in FIG 1 gezeigten Anordnung, bei der alle Heizflächen 11 und 12 vor dem Anfahren vollständig gefüllt sein müssen, zeigt FIG 2 eine Anordnung bei der der Zulauf von Speisewasser in die Verdampferheizfläche 12 geregelt werden kann. Dazu ist in der Verbindungsleitung 15 zwischen der letzten Vorwärmerheizfläche und der Verdampferheizfläche 12 ein Ventil 17, sowie zwischen Verdampferheizfläche 12 und atmosphärischer Entspannungseinrichtung 30 eine Entwässerungsleitung 23 mit einem Ventil 24 vorgesehen. Weiterhin ist parallel zu der Verdampferheizfläche 12 eine Messleitung 18 und eine Druckmesseinrichtung 19 zur Höhenstandsmessung des Speisewassers in der Verdampferheizfläche 12 vorgesehen. Durch diese, mittels der Ventile 17 und 24 regelbare (Teil-) Befüllung der Verdampferheizfläche 12, kann so beim Anfahren der Wasserausstoß aus der Verdampferheizfläche 12 reduziert werden.

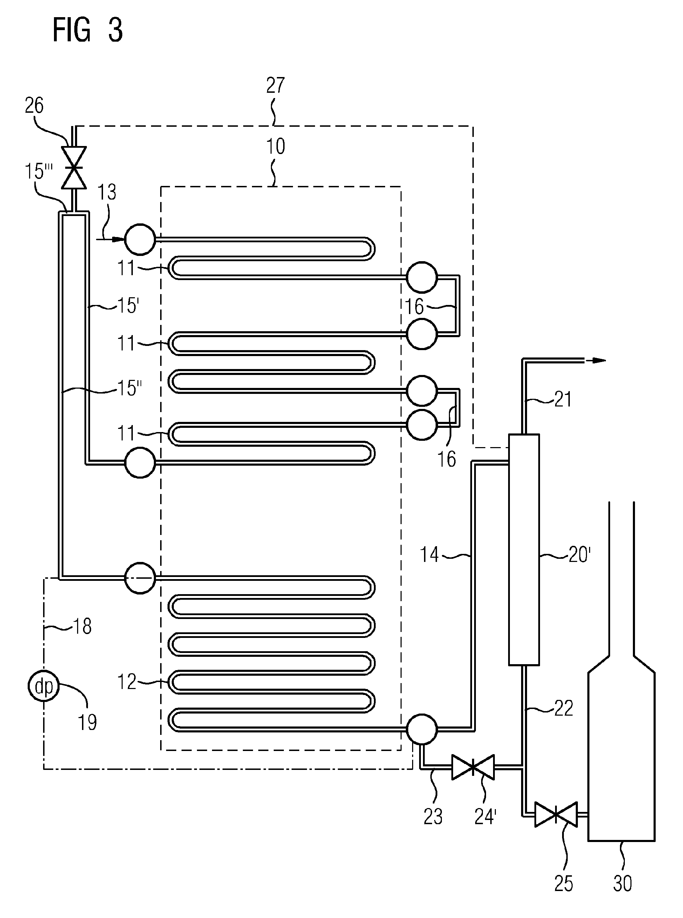

Eine deutliche Verbesserung kann erzielt werden, wenn wie in FIG 3 dargestellt, außerhalb des Abgaskanals 10 und speisewasserseitig zwischen der letzten der Vorwärmeheizflächen 11 und der Verdampferheizfläche 12 ein Überhubrohrsystem angeordnet ist, das so ausgebildet ist das Speisewasser nach vollständiger Befüllung der Vorwärmerheizflächen 11 in einem Steigrohr 15' des Überhubrohrsystems einen Überlauf 15" erreicht und so über ein Fallrohr 15" in die Verdampferheizfläche 12 gelangt. Im Gegensatz zu der in FIG 2 gezeigten Anordnung kann hier Speisewasser, ohne weitere Druckbeaufschlagung in den Vorwärmerheizflächen 11, geregelt in die nachgeschaltete Verdampferheizfläche 12 eingeleitet werden. Die Verdampferheizfläche 12 kann so vor dem Anfahren der Gasund Dampfturbinenanlage soweit teilbefüllt werden, dass eine Optimierung zwischen minimalem Wasseraustoß und optimierter Anfahrzeit erreicht werden kann.

Zusätzliche Maßnahmen, wie Entwässerungsventile 24' und 25 zur Entwässerung der Verdampferheizfläche 12 und/oder eine Entlüftungsleitung 27 mit einem Entlüftungsventil 26, erlauben, dass der Wasserstand des Speisewassers in der Verdampferheizfläche 12 vor jedem Startzustand unabhängig vom Systemdruck eingepegelt werden kann. Um den Wasserstand in der Verdampferheizfläche 12 für die Regelung zu erfassen, ist zudem eine geeignete Höhenstandsmessung installiert. Dazu ist vorteilhafterweise - wie in FIG 2 auch - parallel zu der zumindest einen Verdampferheizfläche 12 eine Messleitung 18 und eine Druckmesseinrichtung 19 zur Höhenstandsmessung des Speisewassers in der zumindest einen Verdampferheizfläche 12 vorgesehen. Dadurch dass die Entlüftungsleitung mit der Dampfleitung 21 zur Dampfableitung aus dem Wasserabscheider 20' und nicht direkt mit der Atmosphäre verbunden ist, kann eine Entlüftung des Überhubrohres ohne eine merkliche Druckabsenkung in der Verdampferheizfläche erfolgen. Dadurch, dass das Ventil 24' vor dem Ventil 25 eingebunden ist, kann das Ventil 24' als einfaches "Auf/Zu"- Ventil ausgelegt werden, während die eigentliche Regelung der Entwässerung der Verdampferheizfläche 12 durch das Ventil 25 erfolgt.

## Patentansprüche

1. Abhitzedampferzeuger, insbesondere Abhitzedampferzeuger in stehender Bauweise, mit
- einem Abgaskanal (10) in dem zumindest eine Verdampferheizfläche (12) und zumindest eine Vorwärmerheizfläche (11) angeordnet sind, wobei die zumindest eine Verdampferheizfläche (12) und die zumindest eine Vorwärmerheizfläche (11) so miteinander verbunden sind, dass speisewasserseitig die zumindest eine Vorwärmerheizfläche (11) der zumindest einen Verdampferheizfläche (12) vorgeschaltet ist,
- und einem Wasserabscheider (20,20') der der zumindest einen Verdampferheizfläche (12) speisewasserseitig nachgeschaltet ist
**dadurch gekennzeichnet, dass**
außerhalb des Abgaskanals (10) und speisewasserseitig zwischen der zumindest einen Vorwärmerheizfläche (11) und der zumindest einen Verdampferheizfläche (12) ein Überhubrohrsystem angeordnet ist, das so ausgebildet ist das Speisewasser nach vollständiger Befüllung der zumindest einen Vorwärmerheizfläche (11) in einem Steigrohr (15') des Überhubrohrsystems einen Überlauf (15"') erreicht und so über ein Fallrohr (15") in die zumindest eine Verdampferheizfläche (12) gelangt.

2. Abhitzedampferzeuger nach Anspruch 1,
**dadurch gekennzeichnet, dass**
zwischen der zumindest einen Verdampferheizfläche (12) und einer atmosphärische Entspannungseinrichtung (30), eine Entwässerungsleitung (23) mit zumindest einem Entwässerungsventil (24',24,25) zur Entwässerung der zumindest einen Verdampferheizfläche (12) vorgesehen ist.

3. Abhitzedampferzeuger nach Anspruch 1 oder 2,
**dadurch gekennzeichnet, dass**
zwischen dem Überlauf (15"') des Überhubrohrsystems und einer Dampfableitung (21) des Wasserabscheiders (20,20'), eine Entlüftungsleitung (27) mit einem Entlüftungsventil (26) vorgesehen ist.

4. Abhitzedampferzeuger nach einem der Ansprüche 1 bis 3,
**dadurch gekennzeichnet, dass**
parallel zu der zumindest einen Verdampferheizfläche (12) eine Messleitung (18) und eine Druckmesseinrichtung (19) zur Höhenstandsmessung des Speisewassers in der zumindest einen Verdampferheizfläche (12) vorgesehen ist.
